Europäisches Patentamt

European Patent Office

Office européen des brevets

(19)

(11) Publication number: **0 197 492**
**A2**

# (12) EUROPEAN PATENT APPLICATION

(21) Application number: 86104448.5

(22) Date of filing: 01.04.86

(51) Int. Cl.⁴: **H 04 J 3/07**

(30) Priority: 01.04.85 CN 85100049

(43) Date of publication of application:
15.10.86 Bulletin 86/42

(84) Designated Contracting States:
AT BE CH DE FR GB IT LI LU NL SE

(71) Applicant: Qiang Hua University
Qing-Hua Yuan Hai-Dian District
Beijing(CN)

(72) Inventor: Zeng, Lie-Guang Dep. Radio Electronics
Qing-Hua University Qing-Hua Yuan
Hai-Dian District Beijing(CN)

(72) Inventor: Fen, Chung-Xi Dep. Radio Electronics
Qing-Hua University Qing-Hua Yuan
Hai-Dian District Beijing(CN)

(74) Representative: Patentanwälte Beetz sen. - Beetz jun.
Timpe - Siegfried - Schmitt-Fumian
Steinsdorfstrasse 10
D-8000 München 22(DE)

(54) A method and an apparatus for modeling bit rate justification.

(57) The present invention provides a method and an apparatus for modeling bit rate justification which is a kind of synchronous/plexiochronous compatible positive/zero/negative bit rate justification apparatus and effectively eliminates the basic jitter in the positive/zero/negative justification by making use of the principle of transformation of the jitter spectrum, leaving only a small value of jitter in the output. The application of the apparatus of present invention in the frame structures of the positive/zero/negative justification for hierarachies of different orders can reduce the jitter from the full percentage of unit bit to several percents, while the complexity of the apparatus is basically equal to that of the positive justification. The apparatus of the present invention can widely be used in all kinds of digital communication transmission system to obtain good performance.

EP 0 197 492 A2

A Method and an Apparatus for Modeling
Bit Rate Justification


Field of the invention


This invention relates to a method and an apparatus for modeling bit rate justification for multiplexing in digital communication systems.

Background


As compared with the positive bit rate justification which is widely used today for plexiochronous multiplexing, the positive/zero/negative justification has a number of important advantages in the sense of plexiochronous/synchronous compatibility, plexiochronous/digital switching compatibility, symmetry of frame structure and flexibility of network interconnection. However, the existing positive/zero/negative justification is accompanied with high basic jitter produced by pulse stuffing which is difficult to remove, resulting in relatively high output jitter. It is disclosed in a German article entitled "The inherent jitter of positive/zero/negative justification system utilizing digital clock recovery" (Eigenjitter Von Positiv-Null-Negativ-Stopsystemen mit

digitaler Taktrückgewinnung, "Frequenz", 33(1979),12.) that in the positive/zero/negative justification exploited in the PCM30D system using digital clock recovery, the maximum peak to peak output jitter is above 100 ui % unit bit percentage when the input is free of jitter. Since all kinds of communication services demand a strict specified jitter, the jitter has been well-known as an important technical requirement in a digital communication system. Moreover, the jitter is accumulative in the system, its value restricts the number of multiplex and the distance of transmission as the total jitter in a system should not be allowed to exceed a maximum tolerance of 150 ui % set in the CCITT protocol G 703.

As a result, although the positive/zero/negative justification possesses advantages as mentioned above, its application in digital network is restricted due to the high output jitter which deteriorates transmission quality seriously and makes it difficult to involve positive/zero/negative justification into digital network of CCITT protocol G 703.

Summary of the invention

It is an object of the present invention to reduce the high output jitter value in positive/zero/negative bit rate justification by removing the basic jitter.

- 3 -

Based on the principle of spectrum transformation, the spectrum of basic jitter in a positive/zero/negative bit rate justification is first, according to the invention, transformed and shifted from zero frequency range in which the basic jitter is difficult to eliminate to higher frequency range where the removal of the spectral components can be easily realized. Then the high frequency translated version of the basic jitter passes through a phaselocked loop (PLL) in a bit rate recovery part of the apparatus, leaving only waiting jitter in the output which is of negligible amount. Therefore, the goal of reducing the output jitter is achieved.

In order to transform the jitter spectrum, a central frequency Mo of the frequency band toward which the spectrum is shifted should be introduced. The central frequency Mo is referred to as modeling parameter in the present invention. The factors that affect the selection of Mo are as follows: Mo must be set outside the noise band of the PLL in the bit recovery part; the value of the central frequency Mo should be significantly smaller than that of the frame frequency; and the ratio of the frequency Mo over the frame frequency must be chosen as a simple fraction in order to simplify the circuit realization. Besides, the frequency tolerance range and performance of jitter suppression should also be taken into account in selecting the frequency Mo.

In conventional positive/zero/negative bit rate justification, no modeling parameter is set and the process of justification is carried out without additional control. Although there are three possible justifications (positive, zero, negative) in the above mentioned justification, only one works and accomplishes the unidirectional justification at one time, i.e., only one of the three justifications (positive, zero, negative) takes place in the system at one time with the justification rate equals to the difference value made by tributary frequency and multiplexed frequency. The value, since quite small, produces a basic jitter of which the spectrum is centered around low frequency range and falls into the noise band of PLL in the bit rate recovery part. Therefore, the basic jitter is hard to remove. In the apparatus according to the present invention, a modeling parameter is set to provide additional control to the justification; the two justification circuits are included to perform the positive or negative justification separately under the control of the modeling parameter. In this way, positive, negative and zero justifications are carried out simultaneously in the apparatus of the present invention. It is known from the spectrum analysis that if these 2 simultaneously carried-out justifications are independent to each other, the spectrum of the basic jitter is transformed to the vicinity of the modeling parameter Mo and easily filtered out by the PLL in the bit rate recovery part. A correlator is inserted between the two justification circuits in the apparatus of the present invention to remove the correlation of the two justifications effectively, ensuring the independence of the two justifications. Besides, a correlation detector which verifies and detects the stuffing instructions by making use of the character of the fixed bit rate in the first justification so as to improve the capability of reducing the bit slip, and a pre-smoother which is used eliminate the influence of nonlinearity in the PLL, are provided in the bit rate recovery part of the apparatus of the present invention.

In the apparatus of the present invention, the modeling parameter, the correlator and the correlation detector can be designed as common units for all tributary lines so as to reduce complexity. With the character of the symmetry of frame structure in the positive/zero/negative justification, the present invention can either realize multiplexing from (n-1)th order hierarachy to nth order hierarachy, or direct multiplexing from (n-2)th order to nth order with only one justification, or (n-2)th order to nth order, (n-1)th order to nth order hierarachy hybrid multiplexing, offering flexibility in network and reducing complexity.

0197492

## Brief description of the drawings

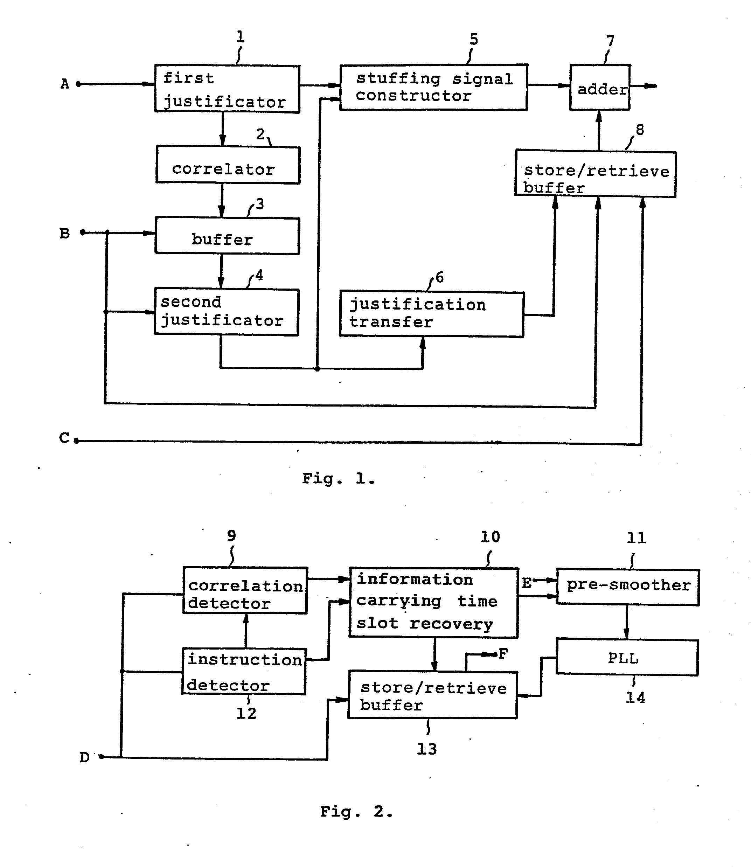

Fig 1 schematically shows the justification part of the apparatus of the present invention; and Fig 2 schematically shows the bit rate recovery part of the apparatus of the present invention.

## Detailed description of the preferred embodiment of the present invention

Referring to Fig 1, the bit rate justification part of the apparatus of the present invention includes a first justification circuit 1, a second justification circuit 4, a correlator 2, a buffer 3, a justification transfer unit 6, a store/retreive buffer 8, a stuffing instruction constructing circuit 5 and an adder 7.

The operation of the bit rate justification part is as follows: first, a negative/zero (or positive/zero) justification on the fixed bit rate Mo is carried out in the first justification circuit 1 within the fixed locations of the negative or positive stuffing bit in the frame structure signal A of positive/zero/negative justification, thus completing a first justification process; a second justification of positive/zero or negative/zero takes place in the second justification circuit 4. A correlator 2 is inserted between the first and second justification circuits 1 and 4 for smoothing the stuffed pulse in the first justification process by the first justification circuit 1 so as to remove the correlation of the two justifications, making the second justification an independent stochastic process in respect to the first justification process. The correlator 2 may be a correlated PLL of which the input is an information-carrying time slot pulse having processed by the first justification circuit 1, and the output is an uniform sequence. Auxiliary signals such as stuffing location, stuffing threshold, and request area limit signals are produced by the frequency dividing chain in the phase detector of the PLL in the second justification process. The buffer 3 which inputs the phase detect signal to the second justification circuit 4 for the second justification process consists of two phase splitters of which the number of cascades should be set to meet the maximum input jitter tolerance requirements. The inputs of the buffer 3 are the tributary clock signal B and the output signal of the correlator 2, its output being fed to the second justification circuit 4 as a phase detect signal. Based on the phase detect signal, the second justification circuit 4 carries out the second justification process of the output of the correlator 2 under the control of the auxiliary signals of the output of the correlator 2, and the output of the second justification circuit 4 is transmitted to the read-out control port of the store/retrieve buffer 8 via the justification transfer circuit 6. The tributary code C is written into the store/retrieve buffer 8 by the tributary clock signal B through the write port of the buffer 8, the code C being read out from the read-out port of the buffer 8 in accordance with the frame structure and the justification results of the two justification processes. The output of the store/retrieve buffer 8 is added in an adder 7 with the output signal of the stuffing instruction constructing circuit 5 to form the final transmit code G.

Referring to Fig 2, the bit rate recovery part includes a instruction detector 12, a correlation detector 9, an information-carrying time slot recovery circuit 10, a pre-smoother 11, a store/retrieve buffer 13 and a PLL 14.

In the bit rate recovery part, the instruction detector 12 first detects stuffing instructions from the receive code D. In order to improve the capability of reducing bit slip, the correlation detector 9 is provided to verify and detect the stuffing instructions from the receive code D by making use of the character of the fixed bit rate in the first justification process. The correlation detector 9 works according to the following rules:    when an individual transmission bit error mispresents a positive or negative justification on certain location as zero justification, the error is corrected by the correlation of the justification; when an individual transmission bit error mispresents a zero justification on certain location as positive or negative justification, the error will be corrected unless the correlated bit error occurs on two successive correlated locations after the location that the bit error occurs on.    After stuffing instruction is detected the outputs of the detectors 9 and 12 are fed to the information - carrying time slot recovery 10 from which the tributary information-carrying time slot signal is obtained to write the tributary code D into the store/retrieve buffer 13.    A tributary code F is read out from the buffer 13 with the tributary read-out clock signal that is provided by the PLL 14.   The pre-smoother 11 which is consisted of N AND-gates and flip-flop circuits is set prior to the PLL 14 to avoid possible low frequency jitter which might be caused by the nonlinear response of the PLL 14.    The rate of the input clock signal E of the pre-smoother 11 equals to the rate of the information-carrying time slot signal which has been processed by the first justification circuit 1 in Fig 1.    This input clock signal E can be either obtained from the existing one or from the reproduction of the receive clock signal.    The output pulse of the pre-smoother 11 is fed to the PLL 14,    with    the

bit rate equals to the tributary frequency.

A 3rd order multiplexer with the function of cross multiplexing among the first order hierarachies is provided in the invention, which allows the multiplexing of four 8448 Kb/s 2nd order hierarachies, or direct multiplexing of sixteen 2048 Kb/s first order hierarachies with only one justification, or hybrid multiplexing of 2nd order and first order hierarachies with the function of synchronous/plexiochronous compatibility. The frame structure conforms with the recommended frame structure of the positive/zero/negative justification of the CCITTG 753 and the peak to peak values of maximum output jitter in the tributary lines of the first and second hierarachy do not exceed 3 ui % with other performances also meeting the respective CCITT protocols.

The apparatus of the present invention preserves many important advantages of the positive/zero/negative justification, such as compatible to synchronous and digital switching network, having symmetrical frame structure and flexible for interconnecting network, while removing the basic jitter effectively and leaving only a small value of waiting jitter. In the frame structures of the 2nd, 3rd and 4th hierarachies recommended by CCITT G745, G753, G754, the maximum peak to peak value of the tributary output jitter when the input free from jitter will not exceed several percents of ui, which is less than that of the conventional positive/zero/negative justification (100 ui %) and the positive justification recommended by CCITT (20 ui % - 35 ui %) with other performances satisfying respective CCITT protocols. The complexity of this apparatus equals to that of the comparable positive justification. The apparatus of the present invention can widely be used in optical fiber transmission system, microwave digital trsnsmission system, digital switching multiplexing system and integrated service network, acquiring system performances required by the development of digital network, satisfying transmission quality requirement for various services and permitting repeated digital multiplexing for long distance communication.

## Claims

1. A method for modeling bit rate justification comprising following steps:
- transforming and shifting the spectrum of basic jitter in a positive/zero/negative bit rate justification from zero frequency range to higher frequency range;
- passing the high frequency converted version of the basic jitter through a phase locked loop; and
- leaving only an amount of jitter in the output which is negligible.

2. A method for modeling bit rate justification as stated in claim 1, wherein a modeling parameter (Mo) is provided in accordance with the requirements of frame frequency, noise band of PLL, frequency tolerance range and jitter suppression.

3. An apparatus for bit rate justification comprising a bit rate justification part which includes in a serial connection:
- a first justificator (1), a correlator (2), a buffer (3) and a second justificator (4), whereby
the first justification circuit receives a frame structure signal (A),
the buffer (3) receives a tributary clock signal (B) and the output of the correlator (2) and
the second justification circuit (4) carries out a second justification process on the basis of the output of the correlator under the control of the auxiliary signals of the output of the correlator (2) and the output of the second justification circuit (4) is passed through a justification transfer circuit (6) to a read-out control port of a store /retrieve buffer (8) receiving as further inputs the tributary clock signal (B) and a tributary code
(C), the code (C) being read out from the read-out port
of the store/retrieve buffer (8) in accordance with the
frame structure and the results of the justification and
supplied to an adder (7) which adds it to the output of a
stuffing signal constructor (5) which receives as its input
signals the output of the first justification circuit (1)
and the output of the second justification curcuit (4);
and

a bit rate recovery part including:
an instruction detector (12), a correlation detector (9),
an information-carrying time slot  recovery circuit (10},
a pre-smoother (11), a store/retrieve buffer (13) and a
phase locked loop (14), whereby
the instruction detector (12) detects stuffing instructions
from the receive code (D),
the correlation detector (9) verifies and detects the
stuffing instructions from the receive code (D) on the
basis of the character of the fixed bit rate in the first
justification process,
the outputs of the detectors (9 and 12) are fed to the information carrying time slot recovery circuit (10) from which
the tributary information-carrying time slot signal is obtained to write the tributary code (D) in the store/retrieve
buffer (13) from which a tributary code (F) is read out with
the tributary read out clock signal which is provided by
the phase locked loop (14),
and
the pre-smoother (11) receives an input clock signal (E) the
rate of which equals to the rate of the information-carrying
time slot signal and the output pulse of the pre-smoothing
circuit (11) is fed to the phase locked loop (14) with the
bit rate which equals to the tributary frequency.

4. An apparatus for bit rate justification as claimed in claim 3, wherein said correlator (2) comprises a correlated phase locked loop circuit.

5. An apparatus for bit rate justification as claimed in claim 3, wherein said pre-smoother (11) comprises N AND gates and flip-flop circuits.

0197492

Fig. 1.

Fig. 2.